# EUROPÄISCHE PATENTANMELDUNG

(11) **EP 4 465 522 A1**
(43) Veröffentlichungstag der Anmeldung: **20.11.2024**
(21) Anmeldenummer: 24170781.9
(22) Anmeldetag: 17.04.2024
(51) Int. Cl.: H02P 27/00

(54) **VERFAHREN UND VORRICHTUNG ZUM STEUERN EINER ELEKTRISCHEN MASCHINE**

(30) Priorität: 15.05.2023 DE 102023204548
(71) Anmelder: VOLKSWAGEN AG, 38440 Wolfsburg (DE)
(72) Erfinder: Siebke, Konstantin, 22525 Hamburg (DE); Wöhl-Bruhn, Henning, 38162 Cremlingen (DE)

(57) **Zusammenfassung**

Die Erfindung betrifft ein Verfahren zum Steuern einer elektrischen Maschine (51), wobei ein Umrichter (52) derart angesteuert wird, dass eine Sollleistungsgröße (3) zumindest in einem ausgewählten Betriebszustand im Mittel durch die elektrische Maschine (51) bereitgestellt wird, wobei das Ansteuern hierzu derart erfolgt, dass zum Bereitstellen der Sollleistungsgröße (3) zwischen mindestens drei Pegeln der Leistungsgröße (10) gewechselt wird und ein Energieumwandlungswirkungsgrad hierbei gegenüber einem Bereitstellen der Sollleistungsgröße (3) durch einen einzigen Pegel erhöht ist. Ferner betrifft die Erfindung eine Vorrichtung (1) zum Steuern einer elektrischen Maschine (51).

## Beschreibung

Die Erfindung betrifft ein Verfahren und eine Vorrichtung zum Steuern einer elektrischen Maschine.

Die Wirkungsgrade von elektrischen Antrieben, die unter Teillast betrieben werden, sind wesentlich geringer als die Wirkungsgrade bei höheren Leistungen. Wird das Drehmoment durch zwei Drehmoment-Pegel im zeitlichen Mittel erreicht, anstatt durch ein kontinuierliches Drehmoment, kann der Wirkungsgrad gesteigert werden. Hierbei ist ein Drehmoment-Pegel höher und das andere geringer (meist 0 Nm) als ein angefordertes Solldrehmoment. Hierdurch wird der Arbeitspunkt zeitweise zu höheren Lasten und in Bereiche höheren Wirkungsgrades verschoben.

Aus der US 10 742 155 B2 sind Verfahren, Steuerungen und elektrische Maschinensysteme bekannt, die eine gepulste Steuerung von elektrischen Maschinen ermöglichen, um die Energieumwandlungseffizienz der Maschine zu verbessern. Unter ausgewählten Betriebsbedingungen wird die elektrische Maschine intermittierend (gepulst) angetrieben. Der gepulste Betrieb bewirkt, dass die Ausgangsleistung der elektrischen Maschine zwischen einem ersten Ausgangspegel und einem zweiten Ausgangspegel wechselt, der niedriger als der erste Ausgangspegel ist. Die Ausgangspegel werden so ausgewählt, dass mindestens eines von der elektrischen Maschine und einem System, das die elektrische Maschine umfasst, während des gepulsten Betriebs einen höheren Energieumwandlungswirkungsgrad aufweist, als die elektrische Maschine hätte, wenn sie mit einem dritten Ausgangspegel betrieben würde, der dazu erforderlich wäre die elektrische Maschine kontinuierlich anzutreiben, um die gewünschte Leistung zu liefern. In einigen Ausführungsformen ist das zweite Ausgangsniveau ein Drehmoment von Null.

Der Erfindung liegt die Aufgabe zu Grunde, ein Verfahren und eine Vorrichtung zum Steuern einer elektrischen Maschine zu verbessern.

Die Aufgabe wird erfindungsgemäß durch ein Verfahren mit den Merkmalen des Patentanspruchs 1 und eine Vorrichtung mit den Merkmalen des Patentanspruchs 9 gelöst. Vorteilhafte Ausgestaltungen der Erfindung ergeben sich aus den Unteransprüchen.

Insbesondere wird ein Verfahren zum Steuern einer elektrischen Maschine zur Verfügung gestellt, wobei ein Umrichter derart angesteuert wird, dass eine Sollleistungsgröße zumindest in einem ausgewählten Betriebszustand im Mittel durch die elektrische Maschine bereitgestellt wird, wobei das Ansteuern hierzu derart erfolgt, dass zum Bereitstellen der Sollleistungsgröße zwischen mindestens drei Pegeln der Leistungsgröße gewechselt wird und ein Energieumwandlungswirkungsgrad hierbei gegenüber einem Bereitstellen der Sollleistungsgröße durch einen einzigen Pegel erhöht ist.

Ferner wird insbesondere eine Vorrichtung zum Steuern einer elektrischen Maschine geschaffen, umfassend eine Steuereinrichtung, wobei die Steuereinrichtung dazu eingerichtet ist, einen Umrichter derart anzusteuern, dass eine Sollleistungsgröße zumindest in einem ausgewählten Betriebszustand im Mittel durch die elektrische Maschine bereitgestellt wird, und das Ansteuern hierzu derart durchzuführen, dass zum Bereitstellen der Sollleistungsgröße zwischen mindestens drei Pegeln der Leistungsgröße gewechselt wird und ein Energieumwandlungswirkungsgrad hierbei gegenüber einem Bereitstellen der Sollleistungsgröße durch einen einzigen Pegel erhöht ist.

Das Verfahren und die Vorrichtung ermöglichen es, die zum Ansteuern der elektrischen Maschine verwendeten Pegel feiner auf die konkreten Gegebenheiten einzustellen. Insbesondere kann eine gezielte Signalformung erfolgen, indem die mindestens drei Pegel für die Leistungsgröße entsprechend gewählt werden. Dies ermöglicht es insbesondere, gezielt akustische Auffälligkeiten und Beeinträchtigungen zu verringern oder sogar zu vermeiden. Es wird hierbei angemerkt, dass die mindestens drei Pegel hierbei nicht die Amplituden der elektrischen Maschine zugeführten Phasenspannungen bezeichnen, sondern die von der elektrischen Maschine bereitgestellte Leistungsgröße, insbesondere ein Drehmoment. Anders ausgedrückt wird die Leistungsgröße, insbesondere das Drehmoment, im zeitlichen Verlauf gemäß den mindestens drei Pegeln eingestellt. Sind also beispielsweise zum Bereitstellen eines Solldrehmoments drei Pegel vorgesehen, so gibt es drei unterschiedliche Werte für das Drehmoment, welche im zeitlichen Verlauf in vorgegebener Weise eingestellt werden, wobei sich im (zeitlichen) Mittel das Solldrehmoment ergibt. Leistungshalbleiter des Umrichters werden dann in an sich bekannter Weise zum Bereitstellen von denjenigen Phasenspannungen angesteuert, mit denen der jeweilige Pegel der mindestens drei Pegel der Leistungsgröße realisiert wird.

Ein Vorteil des Verfahrens und der Vorrichtung ist, dass durch Verwenden von mindestens drei Pegeln der Leistungsgröße eine akustische Beeinträchtigung insbesondere gegenüber einer Verwendung von lediglich zwei Pegeln im Stand der Technik verringert ist und dennoch Arbeitspunkte der elektrischen Maschine und/oder des Umrichters verwendet werden können, bei denen ein Energieumwandlungswirkungsgrad erhöht ist.

Die Leistungsgröße ist insbesondere ein Drehmoment. Grundsätzlich kann die Leistungsgröße jedoch auch eine andere Größe sein, beispielsweise eine mechanische Leistung oder ein Phasenstrom.

Es kann vorgesehen sein, dass das Verfahren und die Vorrichtung nur in vorgegebenen Betriebszuständen zum Einsatz kommen. Hierbei kann beispielsweise vorgesehen sein, dass das Verfahren und die Vorrichtung nur zum Einsatz kommen, wenn ein kontinuierlicher Betrieb mit nur einem Pegel der Leistungsgröße einen schlechteren Energieumwandlungswirkungsgrad aufweisen würde als das Ansteuern mit mindestens drei Pegeln der Leistungsgröße. Der Einsatz des Verfahrens und der Vorrichtung kann beispielsweise mittels einer hinterlegten Kennlinie oder eines hinterlegten Kennfeldes gesteuert werden, wobei in der Kennlinie oder dem Kennfeld in Abhängigkeit von der Sollleistungsgröße und eventuell weiteren Größen oder Bedingungen hinterlegt ist, ob das Verfahren und die Vorrichtung eingesetzt werden sollen oder nicht.

Teile der Vorrichtung, insbesondere die Steuereinrichtung, können einzeln oder zusammengefasst als eine Kombination von Hardware und Software ausgebildet sein, beispielsweise als Programmcode, der auf einem Mikrocontroller oder Mikroprozessor ausgeführt wird. Es kann jedoch auch vorgesehen sein, dass Teile einzeln oder zusammengefasst als anwendungsspezifische integrierte Schaltung (ASIC) und/oder feldprogrammierbares Gatterfeld (FPGA) ausgebildet sind.

In einer Ausführungsform ist vorgesehen, dass Parameter der mindestens drei Pegel der Leistungsgröße unter Berücksichtigung einer hervorgerufenen akustischen Beeinträchtigung gewählt werden oder gewählt sind. Hierdurch kann eine durch das Ansteuern der elektrischen Maschine durch die elektrische Maschine und/oder den Umrichter hervorgerufene akustische Beeinträchtigung, beispielsweise in Form von störenden Geräuschen (z.B. Pfeifen etc.), beeinflusst und insbesondere verringert werden. Es kann beispielsweise vorgesehen sein, dass diejenigen Parameter für die mindestens drei Pegel gewählt werden, bei denen ausgehend von akustischen Testmessungen eine akustische Beeinträchtigung für den Menschen (und/oder Tiere) minimiert ist. Die Parameter umfassen insbesondere zumindest eine Anzahl der Pegel und/oder Werte der Pegel und/oder Dauern der Pegel.

In einer Ausführungsform ist vorgesehen, dass die Parameter der mindestens drei Pegel der Leistungsgröße derart gewählt sind oder gewählt werden, dass ein erzeugter Oberwellenanteil unterhalb eines vorgegebenen Wertes liegt und/oder dass eine vom Oberwellenanteil erzeugte akustische Energie unterhalb eines vorgegebenen Wertes liegt. Hierdurch kann insbesondere ein Oberwellenanteil am akustischen Signal reduziert werden. Der Oberwellenanteil kann hierbei beispielsweise unter Testbedingungen für verschiedene Betriebssituationen mittels akustischer Testmessungen bestimmt werden. Ausgehend von den Testmessungen können die Parameter dann derart festgelegt werden, dass der Oberwellenanteil reduziert ist.

In einer Ausführungsform ist vorgesehen, dass die Parameter der mindestens drei Pegel der Leistungsgröße derart gewählt sind oder gewählt werden, dass ein zeitlicher Verlauf der Leistungsgröße zumindest abschnittsweise einer Sinuskurvenform angenähert ist. Hierdurch können erzeugte Oberwellen verringert werden. Insbesondere kann hierzu eine geeignete Anzahl von Pegeln mit geeigneten Werten und einer geeigneten jeweiligen Dauer gewählt werden, sodass ein Verlauf entsteht, welcher zumindest abschnittsweise der Sinuskurvenform angenähert ist (bzw. einer halben Periode der Sinuskurve).

In einer Ausführungsform ist vorgesehen, dass die Parameter der mindestens drei Pegel der Leistungsgröße fahrsituationsabhängig gewählt sind oder gewählt werden. Hierdurch können in einem Fahrzeug unterschiedliche Fahrsituationen auf unterschiedliche Weise gehandhabt werden. Insbesondere kann vorgesehen sein, in ausgewählten Fahrsituationen eine akustische Beeinträchtigung in Kauf zu nehmen, beispielsweise bei langsamen Fahrten an Ampeln beim Abbiegen, um hierdurch andere Verkehrsteilnehmer akustisch zu warnen. Ferner kann eine Verringerung der akustischen Beeinträchtigung in Abhängigkeit der Fahrsituation durchgeführt werden. Beispielsweise kann auf Autobahnfahrten eine größere akustische Beeinträchtigung zugunsten eines gesteigerten Energieumwandlungswirkungsgrades in Kauf genommen werden, während in Fahrsituationen im Stadtverkehr eine akustische Beeinträchtigung mit Ausnahme von ausgewählten Fahrsituationen (z.B. an Ampeln, in einer Spielstraße etc.) möglichst vollständig vermieden werden soll. Die Parameter (insbesondere die Anzahl und/oder die Werte und/oder die Dauern der mindestens drei Pegel der Leistungsgröße, insbesondere des Drehmoments) können dann für jede Fahrsituation spezifisch gewählt werden oder gewählt sein.

In einer Ausführungsform ist vorgesehen, dass die Parameter der mindestens drei Pegel der Leistungsgröße derart gewählt sind oder gewählt werden, dass eine vorgegebene akustische Signalgebung erfolgt. Hierdurch können gezielt akustische Signale erzeugt werden. In einem Fahrzeug kann einem Fahrer hierdurch beispielsweise eine akustische Rückkoppelung beim Anfahren oder Beschleunigen gegeben werden. Bei einer Fahrt mit konstanter Geschwindigkeit kann eine akustische Beeinträchtigung dann wieder möglichst gering gehalten werden. Auch können akustische Warnsignale hierdurch erzeugt und bereitgestellt werden, beispielsweise um bei einem Fahrzeug weitere Verkehrsteilnehmer zu warnen oder auf das Fahrzeug aufmerksam zu machen. Die vorgegebene akustische Signalgebung kann hierzu mittels der Parameter der mindestens drei Pegel entsprechend modelliert und erzeugt werden.

In einer Ausführungsform ist vorgesehen, dass ein akustisches Signal erfasst wird, wobei die Parameter der mindestens drei Pegel der Leistungsgröße unter Berücksichtigung des erfassten akustischen Signals gewählt sind oder gewählt werden. Hierdurch können insbesondere akustische Messungen dazu verwendet werden, eine akustische Beeinträchtigung zu verringern und/oder gezielt zu verändern. Beispielsweise kann vorgesehen sein, die Parameter der mindestens drei Pegel der Leistungsgröße derart zu wählen, dass eine akustische Energie in Frequenzbereichen auftritt, die von einem Menschen nicht wahrnehmbar sind. Weiter können die Parameter der mindestens drei Pegel der Leistungsgröße derart gewählt werden, dass eine gesamte akustische Energie ausgehend von dem erfassten akustischen Signal minimiert ist oder minimiert wird. Hierbei kann auch eine iterative Änderung der Parameter vorgesehen sein, bei der die Parameter iterativ geändert werden, bis das erfasste akustische Signal oder eine hieraus abgeleitete Größe optimiert, insbesondere minimiert, ist.

In einer Ausführungsform ist vorgesehen, dass die Parameter der mindestens drei Pegel der Leistungsgröße derart gewählt sind oder gewählt werden, dass ein vorgegebenes akustisches Signal und/oder das erfasste akustische Signal zumindest teilweise kompensiert wird. Hierdurch kann eine aktive Rauschunterdrückung (engl. active noise cancelling, ANC) erfolgen. Hierzu ist in an sich bekannter Weise vorgesehen, dass ein dem vorgegebenen akustischen Signal und/oder dem erfassten akustischen Signal entsprechendes Signal mit einer Phasenverschiebung von 180° erzeugt wird, was zu einer (zumindest teilweisen) Auslöschung des ursprünglichen Signals führt.

Weitere Merkmale zur Ausgestaltung der Vorrichtung ergeben sich aus der Beschreibung von Ausgestaltungen des Verfahrens. Die Vorteile der Vorrichtung sind hierbei jeweils die gleichen wie bei den Ausgestaltungen des Verfahrens.

Es wird weiter auch ein Fahrzeug geschaffen, umfassend mindestens eine Vorrichtung nach einer der beschriebenen Ausführungsformen. Ein Fahrzeug ist insbesondere ein Kraftfahrzeug. Grundsätzlich kann das Fahrzeug aber auch ein anderes Land-, Schienen-, Luft-, Wasser- oder Raumfahrzeug sein, beispielsweise eine Drohne oder ein Lufttaxi.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform der Vorrichtung zum Steuern einer elektrischen Maschine;
- Fig. 2a: eine schematische Darstellung zur Verdeutlichung einer Ausführungsform der Vorrichtung und des Verfahrens mit drei Pegeln der Leistungsgröße;
- Fig. 2b: eine schematische Darstellung zur Verdeutlichung einer Ausführungsform der Vorrichtung und des Verfahrens mit vier Pegeln der Leistungsgröße.

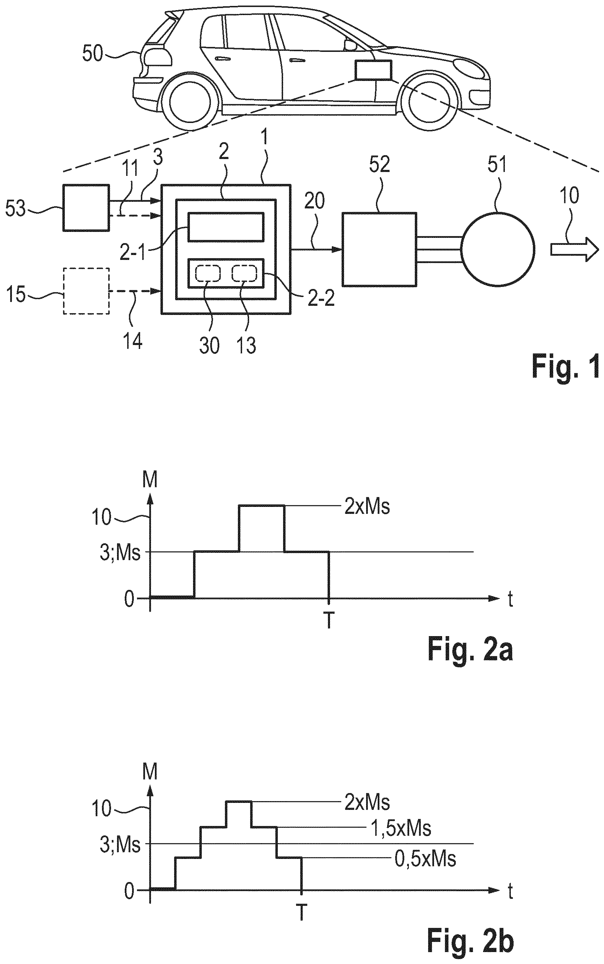

Die Fig. 1 zeigt eine schematische Darstellung einer Ausführungsform der Vorrichtung 1 zum Steuern einer elektrischen Maschine 51. Die Vorrichtung 1 ist insbesondere dazu eingerichtet, das in dieser Offenbarung beschriebene Verfahren durchzuführen. Die Vorrichtung 1 ist beispielhaft in einem Fahrzeug 50, insbesondere einem Kraftfahrzeug, angeordnet und dient dort zum Steuern der elektrischen Maschine 51 am Antriebsstrang des Fahrzeugs 50.

Die Vorrichtung 1 umfasst eine Steuereinrichtung 2. Die Steuereinrichtung 2 umfasst eine Recheneinrichtung 2-1, beispielsweise einen Mikroprozessor oder Mikrocontroller, und einen Speicher 2-2. Die Recheneinrichtung 2-1 führt zum Durchführen des Verfahrens notwendige Rechenoperationen aus.

Die Steuereinrichtung 2 ist dazu eingerichtet, einen (Antriebs-)Umrichter 52 derart anzusteuern, dass eine Sollleistungsgröße 3 zumindest in einem ausgewählten Betriebszustand im Mittel durch die elektrische Maschine 51 bereitgestellt wird. Das Ansteuern führt die Steuereinrichtung 2 hierzu derart durch, dass zum Bereitstellen der Sollleistungsgröße 3 zwischen mindestens drei Pegeln der Leistungsgröße 10 gewechselt wird und ein Energieumwandlungswirkungsgrad hierbei gegenüber einem Bereitstellen der Sollleistungsgröße 3 durch nur einen einzigen Pegel erhöht ist. Die Sollleistungsgröße 3 wird insbesondere von einer Fahrzeugsteuerung 53 bereitgestellt und ist beispielsweise als Solldrehmoment ausgeprägt. Zum Ansteuern des Umrichters 52 übermittelt die Vorrichtung 1 beispielsweise ein hierfür erzeugtes und/oder bereitgestelltes Steuersignal 20. Zum Ansteuern werden Parameter 30 der mindestens drei Pegel von der Steuereinrichtung 2 gewählt und/oder aus dem Speicher 2-2 abgerufen. Die Parameter 30 umfassen insbesondere eine Anzahl der Pegel und/oder Werte der Pegel und/oder Dauern der Pegel der Leistungsgröße 10.

Die Figuren 2a und 2b zeigen schematische Darstellungen zur Verdeutlichung von Ausführungsformen des Verfahrens und der Vorrichtung 1. Gezeigt ist jeweils ein Drehmoment M als Leistungsgröße 10. In der Fig. 2a sind drei Pegel für die Leistungsgröße 10 in Form des Drehmoments M vorgesehen. Jeweilige Werte und jeweilige Dauern der drei Pegel sind hierbei derart gewählt, dass sich im Mittel ein Solldrehmoment Ms als Solleistungsgröße 3 ergibt. Ist der Wert des ersten Pegels beispielsweise 0, der Wert des zweiten Pegels beispielsweise Ms und der Wert des dritten Pegels beispielsweise 2xMs, so ergibt sich im Mittel, da alle Werte für die gleiche Dauer vorliegen, das Solldrehmoment Ms = (0 + Ms + 2xMs + Ms)/4. Dennoch liegt insbesondere zumindest der Wert 2xMs in einem Bereich, in dem die elektrische Maschine 51 (Fig. 1) und/oder der Umrichter 52 (Fig. 1) mit einem größeren Energieumwandlungswirkungsgrad betrieben werden können. Nach der Periodendauer T wird die zeitliche Folge der Pegel des Drehmoments M wiederholt. Die periodische Folge aus den drei Pegeln wird mittels der Steuereinrichtung 2 (Fig. 1) durch entsprechendes Ansteuern des Umrichters 52 in an sich bekannter Weise umgesetzt. In der Fig. 2b ist ein Beispiel mit insgesamt vier Pegeln für das Drehmoment M als Leistungsgröße 10 dargestellt. Die Situation ist hierbei grundsätzlich dieselbe, es wurde lediglich ein weiterer Pegel hinzugefügt. Es ergibt sich im (zeitlichen) Mittel wieder das Solldrehmoment Mₛ = (0+0,5*M_{S}+1,5*M_{S}+2*M_{S}+1,5*M_{S}+0,5M_{S})/6.

Es kann vorgesehen sein, dass Parameter 30 (Fig. 1) der mindestens drei Pegel der Leistungsgröße 10 unter Berücksichtigung einer hervorgerufenen akustischen Beeinträchtigung gewählt werden oder gewählt sind.

Es kann vorgesehen sein, dass die Parameter 30 der mindestens drei Pegel der Leistungsgröße 10 derart gewählt sind oder gewählt werden, dass ein erzeugter Oberwellenanteil unterhalb eines vorgegebenen Wertes liegt und/oder dass eine vom Oberwellenanteil erzeugte akustische Energie unterhalb eines vorgegebenen Wertes liegt.

Es kann vorgesehen sein, dass die Parameter 30 der mindestens drei Pegel der Leistungsgröße 10 derart gewählt sind oder gewählt werden, dass ein zeitlicher Verlauf der Leistungsgröße 10 zumindest abschnittsweise einer Sinuskurvenform angenähert ist. Das grundsätzliche Vorgehen kann hierbei anhand eines Vergleichs zwischen den Figuren 2a und 2b verdeutlicht werden. Gegenüber dem Verlauf der Pegel der Leistungsgröße 10 in Fig. 2a ist der Verlauf der Pegel der Leistungsgröße 10 in Fig. 2b einer Sinuskurvenform stärker angenähert (bzw. einer halben Periode der Sinuskurve). Der Vergleich verdeutlicht, dass eine Sinuskurvenform besser angenähert werden kann durch Erhöhen einer Anzahl von Pegeln, einer geeigneten Wahl der Werte der Pegel und eine geeignete Wahl der Dauern der Pegel.

Es kann vorgesehen sein, dass die Parameter 30 der mindestens drei Pegel der Leistungsgröße 10 fahrsituationsabhängig gewählt sind oder gewählt werden. Hierzu kann beispielsweise eine aktuelle Fahrsituation in an sich bekannter Weise erkannt werden und eine die aktuelle Fahrsituation charakterisierende Information 11 der Vorrichtung 1 zugeführt werden, beispielsweise von der Fahrzeugsteuerung 53. Ausgehend von der übermittelten Information 11 kann die Steuereinrichtung 2 beispielsweise in einer im Speicher 2-2 hinterlegten Nachschlagetabelle 13 die zu der Information 11 zugehörigen Parameter 30 abrufen und diese beim Ansteuern verwenden.

Es kann vorgesehen sein, dass die Parameter 30 der mindestens drei Pegel der Leistungsgröße 10 derart gewählt sind oder gewählt werden, dass eine vorgegebene akustische Signalgebung erfolgt. Die akustische Signalgebung erfolgt hierbei ohne zusätzlichen akustischen Signalgeber, sondern wird ausschließlich mittels der ansonsten als Störgeräusche betrachteten Geräusche an der elektrischen Maschine 51 und/oder dem Umrichter 52 bewirkt. Auch dies kann fahrsituationsabhängig erfolgen, wobei ausgehend von der aktuellen Fahrsituation in der voranstehend beschriebenen Weise durch geeignete Wahl der Parameter 30 eine vorgegebene akustische Signalgebung bewirkt wird.

Es kann vorgesehen sein, dass ein akustisches Signal 14 erfasst wird, wobei die Parameter 30 der mindestens drei Pegel der Leistungsgröße 10 unter Berücksichtigung des erfassten akustischen Signals 14 gewählt sind oder gewählt werden. Das akustische Signal 14 kann beispielsweise mittels einer hierfür eingerichteten Erfassungseinrichtung 15, welche Teil der Vorrichtung 1 oder Teil des Fahrzeugs 50 sein kann, erfasst werden. Das akustische Signal 14 kann mittels der Steuereinrichtung 2 ausgewertet werden, wobei die Parameter 30 der mindestens drei Pegel der Leistungsgröße 10 ausgehend von einem Auswertungsergebnis gewählt werden. Hierbei können auch Verfahren der Künstlichen Intelligenz, insbesondere des Maschinenlernens, zum Einsatz kommen.

Es kann vorgesehen sein, dass die Parameter 30 der mindestens drei Pegel der Leistungsgröße 10 derart gewählt sind oder gewählt werden, dass ein vorgegebenes akustisches Signal und/oder das erfasste akustische Signal 14 zumindest teilweise kompensiert wird. Hierzu werden die Parameter 30 der mindestens drei Pegel der Leistungsgröße 10 insbesondere derart gewählt, dass das vorgegebene akustische Signal und/oder das erfasste akustische Signal 14 mit einer Phasenverschiebung von 180° reproduziert werden und hierdurch eine zumindest teilweise Auslöschung bewirkt wird, wie dies beispielsweise aus dem Bereich der Kopfhörer bekannt ist.

### Bezugszeichenliste

- 1: Vorrichtung
- 2: Steuereinrichtung
- 2-1: Recheneinrichtung
- 2-2: Speicher
- 3: Sollleistungsgröße
- 10: Leistungsgröße
- 11: Information (aktuelle Fahrsituation)
- 13: hinterlegte Nachschlagetabelle
- 14: akustisches Signal
- 20: Steuersignal
- 30: Parameter
- 50: Fahrzeug
- 51: elektrische Maschine
- 52: Umrichter
- 53: Fahrzeugsteuerung
- M: Drehmoment
- Mₛ: Sollrehmoment (Sollleistungsgröße)
- T: Periodendauer
- t: Zeit

## Patentansprüche

1. Verfahren zum Steuern einer elektrischen Maschine (51),
wobei ein Umrichter (52) derart angesteuert wird, dass eine Sollleistungsgröße (3) zumindest in einem ausgewählten Betriebszustand im Mittel durch die elektrische Maschine (51) bereitgestellt wird,
wobei das Ansteuern hierzu derart erfolgt, dass zum Bereitstellen der Sollleistungsgröße (3) zwischen mindestens drei Pegeln der Leistungsgröße (10) gewechselt wird und ein Energieumwandlungswirkungsgrad hierbei gegenüber einem Bereitstellen der Sollleistungsgröße (3) durch einen einzigen Pegel erhöht ist.

2. Verfahren nach Anspruch 1, **dadurch gekennzeichnet, dass** Parameter (30) der mindestens drei Pegel der Leistungsgröße (10) unter Berücksichtigung einer hervorgerufenen akustischen Beeinträchtigung gewählt werden oder gewählt sind.

3. Verfahren nach Anspruch 2, **dadurch gekennzeichnet, dass** die Parameter (30) der mindestens drei Pegel der Leistungsgröße (10) derart gewählt sind oder gewählt werden, dass ein erzeugter Oberwellenanteil unterhalb eines vorgegebenen Wertes liegt und/oder dass eine vom Oberwellenanteil erzeugte akustische Energie unterhalb eines vorgegebenen Wertes liegt.

4. Verfahren nach Anspruch 2 oder 3, **dadurch gekennzeichnet, dass** die Parameter (30) der mindestens drei Pegel der Leistungsgröße (10) derart gewählt sind oder gewählt werden, dass ein zeitlicher Verlauf der Leistungsgröße (10) zumindest abschnittsweise einer Sinuskurvenform angenähert ist.

5. Verfahren nach einem der vorangegangenen Ansprüche, **dadurch gekennzeichnet, dass** die Parameter (30) der mindestens drei Pegel der Leistungsgröße (10) fahrsituationsabhängig gewählt sind oder gewählt werden.

6. Verfahren nach einem der vorangegangenen Ansprüche, **dadurch gekennzeichnet, dass** die Parameter (30) der mindestens drei Pegel der Leistungsgröße (30) derart gewählt sind oder gewählt werden, dass eine vorgegebene akustische Signalgebung erfolgt.

7. Verfahren nach einem der vorangegangenen Ansprüche, **dadurch gekennzeichnet, dass** ein akustisches Signal (14) erfasst wird, wobei die Parameter (10) der mindestens drei Pegel der Leistungsgröße (10) unter Berücksichtigung des erfassten akustischen Signals (14) gewählt sind oder gewählt werden.

8. Verfahren nach einem der vorangegangenen Ansprüche, **dadurch gekennzeichnet, dass** die Parameter (30) der mindestens drei Pegel der Leistungsgröße (10) derart gewählt sind oder gewählt werden, dass ein vorgegebenes akustisches Signal und/oder das erfasste akustische Signal (14) zumindest teilweise kompensiert wird.

9. Vorrichtung (1) zum Steuern einer elektrischen Maschine (51), umfassend:
eine Steuereinrichtung (2), wobei die Steuereinrichtung (2) dazu eingerichtet ist, einen Umrichter (52) derart anzusteuern, dass eine Sollleistungsgröße (3) zumindest in einem ausgewählten Betriebszustand im Mittel durch die elektrische Maschine (51) bereitgestellt wird, und das Ansteuern hierzu derart durchzuführen, dass zum Bereitstellen der Sollleistungsgröße (3) zwischen mindestens drei Pegeln der Leistungsgröße (10) gewechselt wird und ein Energieumwandlungswirkungsgrad hierbei gegenüber einem Bereitstellen der Sollleistungsgröße (3) durch einen einzigen Pegel erhöht ist.

10. Fahrzeug (50), umfassend mindestens eine Vorrichtung (1) nach Anspruch 9.
